# FASCICULE DE BREVET EUROPEEN

(11) **EP 2 134 439 B1**
(45) Date de publication et mention de la délivrance du brevet: **13.08.2014**
(21) Numéro de dépôt: 08717457.9
(22) Date de dépôt: 06.03.2008
(51) Int. Cl.: B01D 33/19

(54) **CELLULE DE FILTRATION ET DISPOSITIF DE FILTRATION METTANT EN OEUVRE UNE TELLE CELLULE**
FILTRATIONSZELLE UND FILTRATIONSVORRICHTUNG UNTER VERWENDUNG EINER DERARTIGEN ZELLE
FILTRATION CELL AND FILTRATION DEVICE USING SUCH CELL

(30) Priorité: 08.03.2007 BE 200700099
(43) Date de publication de la demande: 23.12.2009
(73) Titulaire: Prayon Technologies, 4480 Engis (BE)
(72) Inventeur: KUROWSKI, Serge, B-4121 Neuville-en-Condroz (BE)
(74) Mandataire: Claeys, Pierre
(86) Numéro de dépôt international: PCT/EP2008/052710
(87) Numéro de publication internationale: WO 2008/110495

(56) Documents cités:
- US-A- 3 389 800
- US-A- 4 675 107
- US-A- 6 116 431
- US-A1- 2004 238 439

## Description

La présente invention est relative à une cellule de filtration, comprenant
- une cuve comportant une paroi de fond et quatre parois latérales qui s'étendent vers le haut à partir de la paroi de fond ainsi qu'une ouverture vers le haut, les quatre parois latérales comportant deux parois longitudinales opposées et, reliant celles-ci entre elles, une paroi frontale avant et une paroi frontale arrière de plus grande longueur que la paroi frontale avant,
- un lit filtrant supporté dans la cuve et divisant celle-ci en un compartiment supérieur pour recevoir une matière à filtrer introduite par ladite ouverture et en un compartiment inférieur pour recevoir un filtrat,
- un orifice de sortie disposé dans le compartiment inférieur pour évacuer le filtrat drainé sur la paroi de fond, et
- une bavette de recouvrement qui fait saillie vers l'extérieur à partir du haut d'une desdites parois longitudinales.

On connaît depuis longtemps des dispositifs de filtration à cellules disposées en carrousel. Ces dispositifs sont mis en oeuvre pour filtrer des suspensions, et on les met en usage notamment dans la production d'acide phosphorique (voir par exemple US-3.389.800, US6116431 ou BE-768591).

Dans ces dispositifs connus, dans une vue en plan, les cellules de filtration, de forme sensiblement trapézoïdale, tournent en carrousel autour d'un axe de rotation. A un moment donné, elles sont basculées autour d'un axe radial pour permettre une évacuation du gâteau de filtration et un lavage de la cellule.

Etant donné ce basculement autour d'un axe radial horizontal, un espace suffisant entre les cellules voisines doit être prévu pour permettre le basculement précité, sans accrochage entre ces cellules (voir en particulier BE-768591).

Il en résulte une perte de surface filtrante et donc de capacité du dispositif. Par ailleurs des éclaboussures ou des projections de suspension ou de liquide de lavage du gâteau de filtration peuvent parvenir entre les cellules voisines, ce qui représente également une perte et a pour effet un endommagement des cellules et des appareillages sous-jacents par ces liquides souvent particulièrement agressifs. Cela donne en outre lieu à des coûts d'entretien peu souhaitables.

Pour remédier à ces problèmes, on a déjà prévu le long du bord supérieur d'une des parois longitudinales de chaque cellule une bavette de recouvrement qui fait saillie vers l'extérieur de façon à recouvrir le bord supérieur d'une paroi longitudinale d'une cellule voisine pendant le carrousel. L'espace entre cellules voisines est ainsi protégé et toute suspension parvenue hors des cellules est ramenée dans celles-ci par les bavettes de recouvrement {voir par exemple US-3.389.800). Dans ce brevet, on a également prévu que les parois longitudinales opposées s'étendent vers le haut à partir de la paroi de fond de manière inclinée vers l'extérieur de la cellule, ce qui facilite le déchargement du gâteau des cellules (voir aussi EP-0426794B1).

Cette disposition présente toutefois l'inconvénient de diminuer la surface filtrante à l'intérieur de la cellule, pour une même ouverture supérieure de celle-ci.

Pour remédier à cet inconvénient, on a déjà prévu d'agencer la paroi longitudinale opposée à celle munie d'une bavette de recouvrement de manière qu'elle s'étende vers le haut à partir de la paroi de fond de manière inclinée vers l'intérieur de la cellule (voir par exemple US-4.675.107). Cette disposition permet un basculement aisé des cellules, tout en conservant une surface filtrante identique à celle des cellules à parois longitudinales droites. Il faut toutefois remarquer que, dans l'angle aigu formé entre une paroi longitudinale et la paroi de fond, le déchargement du gâteau de filtration va être malaisé ou même incomplet dans la position basculée, et le lavage du lit filtrant sera peu efficace.

La présente invention a pour but de surmonter les inconvénients cités ci-dessus en proposant une cellule de filtration permettant simultanément un basculement aisé, une surface filtrante de grande superficie, une évacuation du gâteau de filtration sans problème et un bon lavage du lit filtrant. Avantageusement cette cellule de filtration permettra même, pour une même ouverture du dessus que les cellules standards, une augmentation notable de la surface filtrante.

On résout ces problèmes suivant l'invention, par une cellule de filtration telle qu'indiquée au début, dans laquelle
la paroi longitudinale opposée à celle munie d'une bavette de recouvrement comporte une partie inférieure qui s'étend vers le haut à partir de la paroi de fond et une partie supérieure qui s'étend en oblique vers le haut et vers l'intérieur de la cuve à partir du haut de ladite partie inférieure, et
la paroi frontale avant comporte une partie basse qui s'étend vers le haut à partir de la paroi de fond et une partie haute qui s'étend en oblique vers le haut et vers l'intérieur de la cuve à partir du haut de ladite partie basse.

Comme on peut le constater, le lit filtrant situé sous une ouverture vers le haut de la cellule peut ainsi être étendu d'au moins un côté, ce qui augmente la surface filtrante de la cellule par rapport à une cellule à parois droites. Le gain de surface peut atteindre entre 5 et 10 % par rapport à une cellule composée de parois s'étendant vers le haut suivant un angle de 90° par rapport au lit filtrant. Par ailleurs la disposition inclinée vers l'intérieur de la partie supérieure de la paroi longitudinale opposée à celle munie d'une bavette de recouvrement et de la partie haute de la paroi frontale avant permet une rotation de la cellule autour de son axe radial horizontal sans encombre et sans devoir écarter les cellules de filtration voisines.

Suivant une forme de réalisation préférée de l'invention, ladite partie inférieure est verticale et ladite partie supérieure est inclinée vers l'intérieur par rapport à ladite partie inférieure d'un angle compris entre 15 et 30°. De même, avantageusement, ladite partie basse est verticale et ladite partie haute est inclinée vers l'intérieur par rapport à ladite partie basse d'un angle compris entre 15 et 30°.

Suivant une forme de réalisation avantageuse de réalisation de l'invention, ladite partie haute de la paroi frontale avant et ladite partie supérieure de la paroi longitudinale opposée à celle munie d'une bavette de recouvrement sont reliées en formant entre elles un pan coupé. Cet agencement permet d'agrandir la cellule vers l'avant, c'est-à-dire vers le centre du dispositif de filtration, sans provoquer de problèmes de basculement lorsque les cellules doivent être retournées.

La paroi longitudinale munie d'une bavette de recouvrement peut s'étendre verticalement vers le haut à partir de la paroi de fond. On peut éventuellement aussi envisager suivant l'invention qu'elle comporte une partie de dessous qui s'étend vers le haut à partir de la paroi de fond et une partie de dessus qui s'étend en oblique vers le haut et vers l'intérieur de la cuve à partir du haut de ladite partie de dessous. Dans ce cas, de préférence ladite partie de dessous est verticale et ladite partie de dessus est inclinée vers l'intérieur par rapport à ladite partie de dessous d'un angle compris entre 15 et 30°.

Suivant une forme perfectionnée de réalisation de l'invention, ledit lit filtrant est supporté dans la cuve le long desdites quatre parois latérales, le lit filtrant étant relié à ladite paroi longitudinale opposée à celle munie d'une bavette de recouvrement en dessous du haut de sa partie inférieure qui est verticale, et/ou à ladite paroi avant en dessous du haut de sa partie basse qui est verticale, ainsi qu'éventuellement à ladite paroi longitudinale munie d'une bavette de recouvrement en dessous du haut de sa partie de dessous qui est verticale. Cet agencement du lit filtrant permet un décollement aisé du gâteau de filtration à partir de la surface filtrante, car celle-ci est entourée de parties de paroi verticales. Les parties de paroi inclinées vers l'intérieur ne débutent qu'à une certaine distance au-dessus du lit filtrant, et préférentiellement au-dessus de la surface du gâteau de filtration, et elles ne représentent donc pas une entrave au décollement du gâteau de filtration et au lavage du lit filtrant, en position basculée de la cellule.

D'autres formes de réalisation de cellule de filtration suivant l'invention sont indiquées dans les revendications annexées.

L'invention concerne également un dispositif de filtration comprenant au moins une cellule de filtration suivant l'invention.

D'autres détails et particularités de l'invention ressortiront de la description donnée ci-après, à titre non limitatif et avec référence aux dessins annexés.
La figure 1 représente une vue en plan d'une cellule de filtration suivant l'invention.
La figure 2 représente une vue en coupe longitudinale suivant la ligne II-II de la figure 1.
La figure 3 représente une vue en élévation de l'avant de la cellule représentée sur les figures 1 et 2.
La figure 4 représente une vue en élévation de l'avant d'une variante de réalisation de cellule suivant l'invention.
La figure 5 représente une vue schématique partielle en perspective pour comparer une cellule suivant l'invention et une cellule à parois droites selon l'état de la technique.
La figure 6 représente une vue schématique partielle en plan du dessus de deux cellules de filtration suivant l'invention voisines.
Les figures 7a, 7b et 7c sont des vues en section de la figure 6 prises le long des lignes VIIa, VIIb et VIIc de celle-ci.
La figure 8 représente une vue schématique, développée dans un plan, de cellules suivant l'invention au moment de leur basculement et de leur lavage, cette vue étant prise de l'extérieur du dispositif de filtration.

Sur les différentes figures, les éléments identiques ou analogues portent les mêmes références.

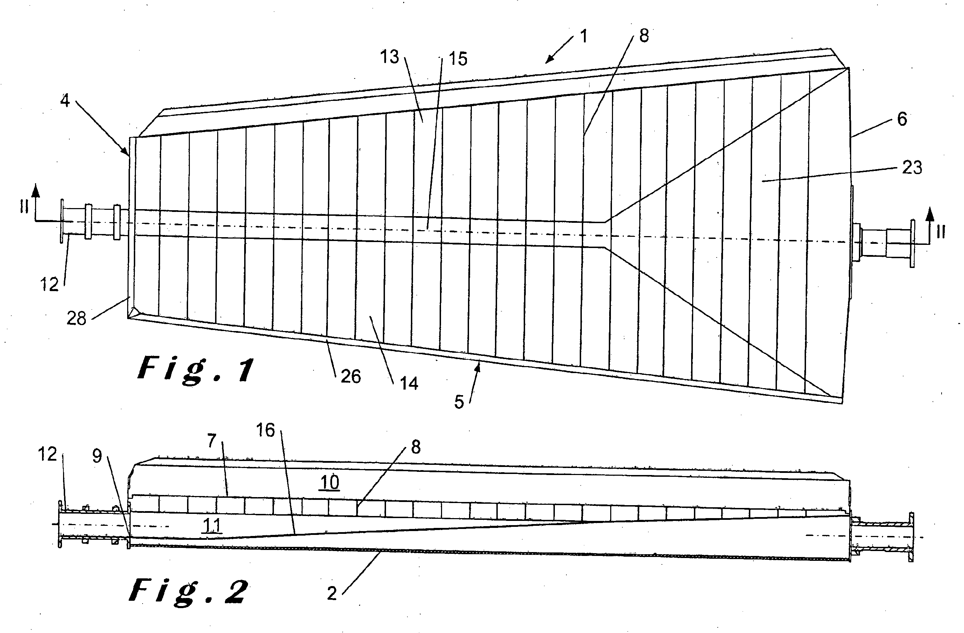

Ainsi qu'il ressort de l'exemple de la cellule de filtration suivant l'invention illustrée sur les figures 1 à 3, cette cellule comprend une cuve désignée par la référence générale 1 comportant une paroi de fond 2, des parois latérales s'étendant vers le haut à partir de la paroi de fond 2 et une ouverture vers le haut. Les quatre parois latérales comportent deux parois longitudinales opposées 3 et 5 et, reliant celles-ci entre elles, une paroi frontale avant 4 et une paroi frontale arrière 6 de plus grande longueur que la paroi frontale avant. En plan, cette cellule a donc une forme approximativement trapézoïdale, ou de secteur de polygone, et cela parce qu'elle est prévue pour être disposée à côté d'autres cellules semblables en vue de former un appareil de filtration continu tournant à la manière d'un carrousel. Il doit être entendu que la cellule suivant l'invention n'est limitée ni à cette forme, ni à l'utilisation dans un tel appareillage.

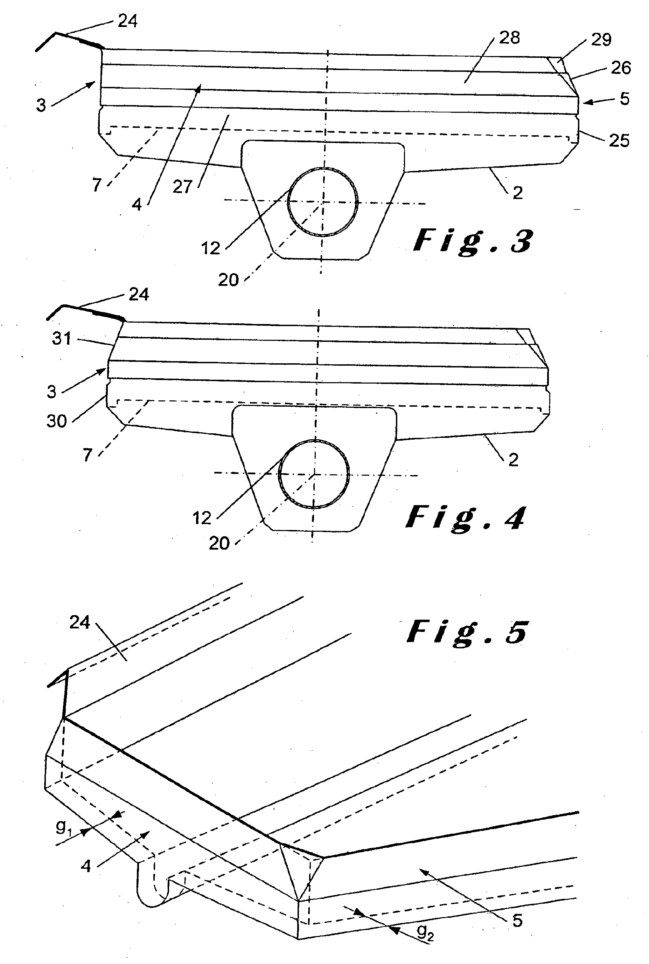

La cuve 1 d'une telle cellule de filtration contient un lit filtrant 7, représenté sur la figure 2 et, par une ligne en traits interrompus, sur les figures 3 et 4. Un tel lit filtrant est connu en soi et il est généralement composé d'un treillis de support sur lequel repose une nappe en tissu filtrant. Le treillis de support est lui-même supporté de manière connue notamment par des nervures 8 qui s'étendent sensiblement transversalement à la cellule, et qui servent simultanément de raidisseurs.

Le lit filtrant 7 divise la cuve 1 en un compartiment supérieur 10 pour recevoir la matière à filtrer et un compartiment inférieur 11 pour le filtrat.

Ainsi qu'il ressort en particulier de la figure 2, un orifice de sortie 9 est prévu au bas de la paroi frontale avant 4, pour l'évacuation des filtrats par un conduit d'évacuation 12.

La paroi de fond de la cuve 1 supporte deux sections d'écoulement latérales 13 et 14, disposées de part et d'autre d'un chenal de drainage 15, de manière inclinée vers le bas en direction de celui-ci. Ces sections d'écoulement latérales 13 et 14 forment ainsi deux plans inclinés qui présentent chacune une pente orientée transversalement au chenal de drainage 15, cette pente pouvant être de 3 à 8°, de préférence de 4 à 6°.

Le chenal de drainage 15 présente lui-même un fond 16 incliné entre son extrémité haute et son extrémité basse, qui débouche en face de l'orifice de sortie 9 décrit précédemment.

La cellule représentée ici est prévue pour pouvoir être basculée autour d'un axe 20, en vue de l'élimination du gâteau de matière filtrée, à la fin du traitement. Deux paliers non représentés supportent la cellule de manière à permettre son pivotement autour de cet axe. Le conduit d'évacuation 12 est raccordé à l'orifice 9.

Suivant l'invention, la paroi de fond 2 supporte une section d'extrémité 23 qui est disposée de manière inclinée vers le bas le long de la paroi frontale arrière 6, opposée à la paroi 4 dotée de l'orifice de sortie 9.

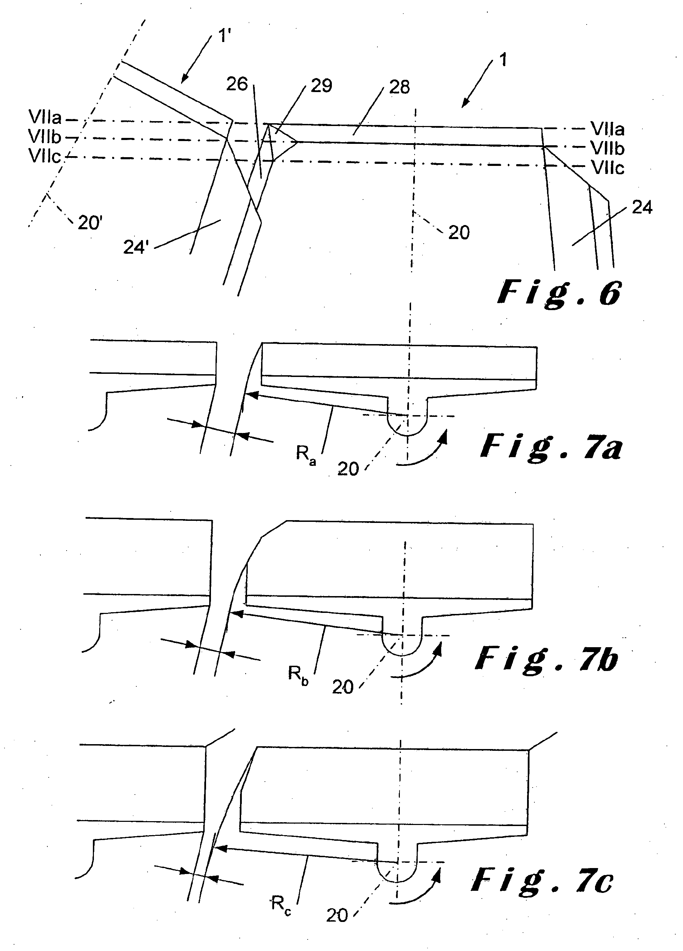

Dans l'exemple illustré sur les figures 1 à 3, la paroi longitudinale 3 est munie d'une bavette de recouvrement 24 qui fait saillie vers l'extérieur à partir du haut de cette paroi. Cette bavette est prévue pour recouvrir latéralement une partie de la cellule de filtration voisine (voir figure 6). Dans cet exemple, la bavette est pliée longitudinalement de façon à former un V renversé. De cette manière, tout liquide parvenant sur la bavette peut s'écouler vers l'une ou l'autre des cellules voisines, sans se perdre entre les cellules et endommager éventuellement des appareillages sous-jacents.

Selon l'exemple illustré, la paroi longitudinale 5, qui est située à l'opposé de celle munie d'une bavette 24, comporte une partie inférieure 25 qui s'étend vers le haut à partir de la paroi de fond, de préférence verticalement, et une partie supérieure 26 qui s'étend en oblique vers le haut et vers l'intérieur de la cuve à partir du haut de la partie inférieure 25. L'inclinaison de la partie supérieure 26 par rapport à la partie inférieure 25 peut être comprise entre 15 et 30°; elle est de préférence de 20°.

Dans cet exemple également, la paroi frontale avant 4 comporte une partie basse 27 qui s'étend vers le haut à partir de la paroi de fond, de préférence verticalement, et une partie haute 28 qui s'étend en oblique vers le haut et vers l'intérieur de la cuve à partir du haut de la partie basse 27. L'inclinaison de la partie haute 28 par rapport à la partie basse 27 peut être comprise entre 15 et 30°; elle est de préférence de 20°.

La paroi longitudinale 3 est, dans cet exemple, sensiblement verticale.

La partie supérieure 26 et la partie haute 28 des parois 5 et 4 sont réunies par un pan coupé 29.

Dans l'exemple illustré sur les figures 1 à 3, le lit filtrant 7 est supporté dans la cuve le long des quatre parois 3 à 6. Comme on peut le voir sur ces figures le lit filtrant est relié à chacune de ces parois dans une partie sensiblement verticale. Les parois 3 et 6 sont sensiblement verticales sur toute leur hauteur. Par ailleurs, ce lit filtrant est fixé sur la partie inférieure sensiblement verticale 25 de la paroi 5 et sur la partie basse sensiblement verticale 27 de la paroi 4. En position basculée de 180° autour de l'axe 20, la surface du gâteau de filtration n'atteint pas le pli entre les parties sensiblement verticales et les parties inclinées vers l'intérieur des parois. Il peut donc se détacher du lit filtrant sans obstacle immédiat, les parties de paroi inclinées vers l'intérieur 26, 28 et 29 étant situées nettement plus bas que le lit filtrant 7. Celui-ci peut en outre être nettoyé par pulvérisation d'un liquide de lavage sur sa surface, sans difficultés qui seraient dues à des angles morts difficilement atteignables.

Ainsi qu'il ressort de la figure 4, on peut prévoir dans une variante de réalisation de cellule de filtration suivant l'invention que la paroi longitudinale 3 munie de la bavette 24 comporte une partie de dessous 30 qui s'étend vers le haut à partir de la paroi de fond, de préférence sensiblement verticalement, et une partie de dessus 31 qui s'étend en oblique vers le haut et vers l'intérieur de la cuve à partir du haut de la partie de dessous 30. De préférence l'inclinaison de la partie de dessus 31 par rapport à la partie de dessous 30 est comprise entre 15 et 30°; elle est de préférence de 20°.

Dans cette forme de réalisation également, le lit filtrant 7 est fixé à la paroi longitudinale 3 dans la partie de dessous 30 de celle-ci, laquelle est sensiblement verticale et cela de façon que le gâteau de filtration n'atteigne pas le pli entre la partie de dessous sensiblement verticale et la partie inclinée vers l'intérieur. Ainsi il n'y a donc pas d'entrave au détachement du gâteau de filtration en position basculée de la cellule.

Sur la figure 5, on a représenté en traits pleins une cellule de filtration suivant l'invention et en traits interrompus une cellule de filtration de l'art antérieur présentant la même ouverture vers le haut mais pourvues de parois droites. On observe un allongement g1 de la cellule vers le centre du dispositif de filtration et un élargissement g2 du côté opposé à la bavette. La surface filtrante raccordée aux parties verticales des parois latérales 3 à 6 de la cellule peut ainsi augmenter avantageusement de 5 à 10 %.

La cuve 1 illustrée sur la figure 6 est représentée dans une vue en plan partielle avec une cuve 1' voisine dont l'axe de basculement 20' est situé en oblique par rapport à l'axe de basculement 20 de la cuve 1. Le basculement de la cuve 1 dans le sens contraire aux aiguilles d'une montre est illustré sur les sections 7a à 7c. Les arcs de cercle suivis par la cuve 1 aux différentes sections prises dans la figure 6 sont indiqués par la référence Ra, Rb et respectivement Rc. Comme on peut le voir le jeu entre cellules grandit plus on se rapproche du centre du dispositif de filtration et donc plus on étend la partie avant de la cellule vers ce centre. Le gain de surface qui en résulte n'a donc aucun effet négatif sur les possibilités de basculement des cellules voisines.

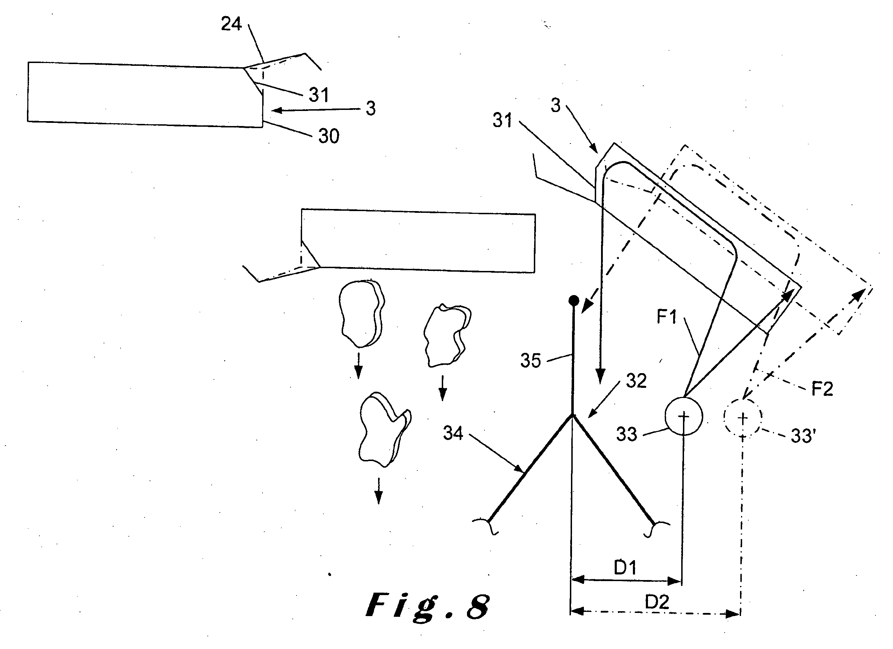

Dans l'exemple de réalisation illustré sur la figure 8, des cellules présentant une paroi frontale avant suivant l'invention avec simultanément une paroi longitudinale 3 dotée d'une bavette 24 et présentant un pli entre une partie de dessous 30 sensiblement verticale et une partie de dessus 31 inclinée vers l'intérieur sont représentées pendant leur basculement et leur nettoyage. En traits interrompus, on a représenté une cellule de la technique antérieure à parois droites.

Après basculement à 180°, il y a ce que l'on appelle une décharge sèche du gâteau de filtration dans une trémie à matières solides 34 représentée de manière schématique. La paroi verticale de cette trémie sert de cloison séparatrice 35 commune à une trémie à eau de lavage 32.

Après la décharge sèche, les cellules retournent vers leur position initiale. Pendant ce temps les lits filtrants sont nettoyés par de l'eau sous pression projetée par une rampe de lavage 33. La trajectoire des eaux de lavage est illustrée par la flèche F1 pour la cellule suivant l'invention.

Comme on peut le remarquer le long de la paroi longitudinale 3 avec partie de dessus 31 repliée vers l'intérieur, l'eau de lavage sort de la cellule de filtration verticalement vers le bas, ce qui permet de réduire la distance D1 entre la rampe 33 et la cloison séparatrice 35 des trémies 30 et 32, par rapport à la distance nécessaire D2 pour le lavage d'une cellule de filtration selon l'état de la technique. En effet dans ce dernier cas la paroi munie d'une bavette est droite, et l'eau de lavage sort de la cellule de filtration selon la trajectoire illustrée par la flèche F2. Comme on peut le voir sur la figure 8, si l'on veut éviter une pénétration de liquide de lavage dans la trémie à solides 34, et récupérer 100 % de l'eau de lavage des lits filtrants, il faut écarter la rampe de lavage 33' de la cloison séparatrice, ainsi que la position des cellules pendant leur nettoyage. Il en résulte donc à nouveau une perte de place dans le dispositif de filtration, ce qui justifie l'agencement suivant l'invention d'une paroi côté bavette munie d'un pli entre partie de dessous et partie de dessus, comme illustré sur la figure 4.

## Revendications

1. Cellule de filtration, comprenant
- une cuve (1) comportant une paroi de fond (2) et quatre parois latérales qui s'étendent vers le haut à partir de la paroi de fond ainsi qu'une ouverture vers le haut, les quatre parois latérales comportant deux parois longitudinales opposées (3, 5) et, reliant celles-ci entre elles, une paroi frontale avant (4) et une paroi frontale arrière (6) de plus grande longueur que la paroi frontale avant,
- un lit filtrant (7) supporté dans la cuve (1) et divisant celle-ci en un compartiment supérieur (10) pour recevoir une matière à filtrer introduite par ladite ouverture et en un compartiment inférieur (11) pour recevoir un filtrat,
- un orifice de sortie (9) disposé dans le compartiment inférieur (11) pour évacuer le filtrat drainé sur la paroi de fond (2), et
- une bavette de recouvrement (24) qui fait saillie vers l'extérieur à partir du haut d'une desdites parois longitudinale,
**caractérisée en ce que**
la paroi longitudinale (5) opposée à celle munie d'une bavette de recouvrement (24) comporte une partie inférieure (25) qui s'étend vers le haut à partir de la paroi de fond (2) et une partie supérieure (26) qui s'étend en oblique vers le haut et vers l'intérieur de la cuve (1) à partir du haut de ladite partie inférieure (25), et
la paroi frontale avant (4) comporte une partie basse (27) qui s'étend vers le haut à partir de la paroi de fond (2) et une partie haute (28) qui s'étend en oblique vers le haut et vers l'intérieur de la cuve (1) à partir du haut de ladite partie basse (27).

2. Cellule de filtration suivant la revendication 1, **caractérisée en ce que** ladite partie inférieure (25) est verticale et ladite partie supérieure (26) est inclinée vers l'intérieur par rapport à ladite partie inférieure d'un angle compris entre 15 et 30°.

3. Cellule de filtration suivant l'une des revendications 1 et 2, **caractérisée en ce que** ladite partie basse (27) est verticale et ladite partie haute (28) est inclinée vers l'intérieur par rapport à ladite partie basse d'un angle compris entre 15 et 30°.

4. Cellule de filtration suivant l'une des revendications 2 et 3, **caractérisée en ce que** ladite partie haute (28) de la paroi frontale avant (4) et ladite partie supérieure (26) de la paroi longitudinale (5) opposée à celle munie d'une bavette de recouvrement sont reliées en formant entre elles un pan coupé (29).

5. Cellule de filtration suivant l'une quelconque des revendications 1 à 4, **caractérisée en ce que** la paroi longitudinale (3) munie d'une bavette de recouvrement (24) s'étend verticalement vers le haut à partir de la paroi de fond (2).

6. Cellule de filtration suivant l'une quelconque des revendications 1 à 4, **caractérisée en ce que** la paroi longitudinale (3) munie d'une bavette de recouvrement (24) comporte une partie de dessous (30) qui s'étend vers le haut à partir de la paroi de fond (2) et une partie de dessus (31) qui s'étend en oblique vers le haut et vers l'intérieur de la cuve (1) à partir du haut de ladite partie de dessous (30).

7. Cellule de filtration suivant la revendication 6, **caractérisée en ce que** ladite partie de dessous (30) est verticale et ladite partie de dessus (31) est inclinée vers l'intérieur par rapport à ladite partie de dessous d'un angle compris entre 15 et 30°.

8. Cellule de filtration suivant l'une quelconque des revendications 1 à 7, **caractérisée en ce que** la paroi de fond (2) comporte des sections d'écoulement disposées de manière inclinée vers un chenal de drainage (15) qui débouche dans ledit orifice de sortie (9).

9. Cellule de filtration suivant l'une quelconque des revendications 1 à 8, **caractérisée en ce qu'**elle est supportée de manière à pouvoir pivoter autour d'un axe longitudinal (20) s'étendant horizontalement en dessous du lit filtrant de la cellule, entre avant et arrière de celle-ci.

10. Cellule de filtration suivant l'une quelconque des revendications 7 à 9, **caractérisée en ce que** ledit lit filtrant (7) est supporté dans la cuve le long desdites quatre parois latérales, le lit filtrant étant relié à ladite paroi longitudinale (5) opposée à celle munie d'une bavette de recouvrement en dessous du haut de sa partie inférieure (25) qui est verticale, et/ou à ladite paroi avant (4) en dessous du haut de sa partie basse (27) qui est verticale.

11. Cellule de filtration suivant la revendication 10, **caractérisée en ce que** ledit lit filtrant est relié à ladite paroi longitudinale (3) munie d'une bavette de recouvrement en dessous du haut de sa partie de dessous (30) qui est verticale.

12. Dispositif de filtration comprenant au moins une cellule de filtration suivant l'une quelconque des revendications 1 à 11.

## Patentansprüche

1. Filterzelle, umfassend:
- eine Wanne (1), umfassend eine Bodenwand (2) und vier Seitenwände, die sich nach oben von der Bodenwand aus erstrecken, sowie eine Öffnung nach oben, wobei die vier Seitenwände zwei gegenüberliegende Längswände (3, 5), die diese miteinander verbinden, eine vordere Stirnwand (4) und einer hintere Stirnwand (6) von größerer Länge als die vordere Stirnwand umfassen,
- ein Filterbett (7), das in der Wanne (1) getragen wird und diese in ein oberes Abteil (10) zur Aufnahme eines durch die Öffnung eingeführten zu filternden Materials und in ein unteres Abteil (11) zur Aufnahme eines Filtrats unterteilt,
- eine Ausgangsöffnung (9), die in dem unteren Abteil (11) angeordnet ist, um das auf der Bodenwand (2) gesammelte Filtrat abzuleiten, und
- ein Abdeckblech (24), das nach außen oben von eine der Längswände übersteht,
**dadurch gekennzeichnet, dass**
die Längswand (5), die jener gegenüberliegt, die mit einem Abdeckblech (24) versehen ist, einen unteren Teil (25), der sich von der Bodenwand (2) nach oben erstreckt, und einen oberen Teil (26) umfasst, der sich schräg nach oben und zum Inneren der Wanne (1) von der unteren Wand (25) oben aus erstreckt, und
die vordere Stirnwand (4) einen niedrigen Teil (27), der sich von der Bodenwand (2) nach oben erstreckt, und einen hohen Teil (28) umfasst, der sich schräg nach oben und zum Inneren der Wanne (1) vom niedrigen Teil (27) oben aus erstreckt.

2. Filterzelle nach Anspruch 1, **dadurch gekennzeichnet, dass** der untere Teil (25) vertikal ist, und der obere Teil (26) nach innen in Bezug zum unteren Teil um einen Winkel zwischen 15 und 30° geneigt ist.

3. Filterzelle nach einem der Ansprüche 1 und 2, **dadurch gekennzeichnet, dass** der niedrige Teil (27) vertikal ist, und der hohe Teil (28) nach innen in Bezug zum niedrigen Teil um einen Winkel zwischen 15 und 30° geneigt ist.

4. Filterzelle nach einem der Ansprüche 2 und 3, **dadurch gekennzeichnet, dass** der hohe Teil (28) der vorderen Stirnwand (4) und der obere Teil (26) der Längswand (5), der jener gegenüberliegt, die mit einem Abdeckblech versehen ist, verbunden sind, wobei sie zwischen sich eine Schnittfläche (29) bilden.

5. Filterzelle nach einem der Ansprüche 1 bis 4, **dadurch gekennzeichnet, dass** sich die Längswand (3), die mit einem Abdeckblech (24) versehen ist, vertikal nach oben von der Bodenwand (2) aus erstreckt.

6. Filterzelle nach einem der Ansprüche 1 bis 4, **dadurch gekennzeichnet, dass** die Längswand (3), die mit einem Abdeckblech (24) versehen ist, einen darunter liegenden Teil (30), der sich von der Bodenwand (2) aus nach oben erstreckt, und einen darüber liegenden Teil (31) umfasst, der sich schräg nach oben und zum Inneren der Wanne (1) vom darunter liegenden Teil (30) oben aus erstreckt.

7. Filterzelle nach Anspruch 6, **dadurch gekennzeichnet, dass** der darunter liegende Teil (30) vertikal ist, und der darüber liegende Teil (31) nach innen in Bezug zum darunter liegenden Teil um einen Winkel zwischen 15 und 30° geneigt ist.

8. Filterzelle nach einem der Ansprüche 1 bis 7, **dadurch gekennzeichnet, dass** die Bodenwand (2) Abflussquerschnitte umfasst, die geneigt zu einem Ableitungskanal (15), der in die Ausgangsöffnung (9) mündet, angeordnet sind.

9. Filterzelle nach einem der Ansprüche 1 bis 8, **dadurch gekennzeichnet, dass** sie derart getragen wird, dass sie um eine Längsachse (20) schwenken kann, die sich horizontal über dem Filterbett der Zelle zwischen dem vorderen und dem hinteren Bereich derselben erstreckt.

10. Filterzelle nach einem der Ansprüche 7 bis 9, **dadurch gekennzeichnet, dass** das Filterbett (7) in der Wanne entlang der vier Seitenwände getragen wird, wobei das Filterbett mit der Längswand (5), die jener gegenüberliegt, die mit einem Abdeckblech unterhalb des oberen Bereichs seines unteren Teils (25), der vertikal ist, versehen ist, und/oder mit der vorderen Wand (4) unterhalb des oberen Bereichs seines niedrigen Teils (27), der vertikal ist, verbunden ist.

11. Filterzelle nach Anspruch 10, **dadurch gekennzeichnet, dass** das Filterbett mit der Längswand (3), die mit einem Abdeckblech unterhalb des oberen Bereichs seines darunter liegenden Teils (30), der vertikal ist, verbunden ist.

12. Filtervorrichtung, umfassend mindestens eine Filterzelle nach einem der Ansprüche 1 bis 11.

## Claims

1. A filtration cell, comprising
- a tank (1) including a bottom wall (2) and four side walls that extend upward from the bottom wall as well as an upward opening, the four side walls including two opposite longitudinal walls (3, 5) and, connecting them to each other, a forward frontal wall (4) and a rear frontal wall (6) that is longer than the forward frontal wall,
- a filtration bed (7) supported in the tank (1) and dividing the latter into an upper compartment (10) to receive a material to be filtered, introduced via said opening, and a lower compartment (11) for receiving a filtrate,
- an outlet orifice (9) positioned in the lower compartment (11) to evacuate the filtrate drained on the bottom wall (2), and
- a covering flap (24) that protrudes outward from the top of one of said longitudinal walls,
**characterized in that**
the longitudinal wall (5) opposite that provided with a covering flap (24) includes a lower part (25) that extends upward from the bottom wall (2) and an upper part (26) that extends obliquely upward and toward the inside of the tank (1) from the top of said lower part (25), and
the forward frontal wall (4) includes a lower part (27) that extends upward from the bottom wall (2) and an upper part (28) that extends obliquely upward and toward the inside of the tank (1) from the top of said lower part (27).

2. The filtration cell according to claim 1, **characterized in that** said lower part (25) is vertical and said upper part (26) is inclined inward relative to said lower part by an angle comprised between 15 and 30°.

3. The filtration cell according to one of claims 1 and 2, **characterized in that** said lower part (27) is vertical and said upper part (28) is inclined inward relative to said lower part by an angle comprised between 15 and 30°.

4. The filtration cell according to one of claims 2 and 3, **characterized in that** said upper part (28) of the forward frontal wall (4) and said upper part (26) of the longitudinal wall (5) opposite that provided with a covering flap are connected while forming a cut-off corner (29) between them.

5. The filtration cell according to any one of claims 1 to 4, **characterized in that** the longitudinal wall (3) provided with a covering flap (24) extends vertically upward from the bottom wall (2).

6. The filtration cell according to any one of claims 1 to 4, **characterized in that** the longitudinal wall (3) provided with a covering flap (24) includes a bottom part (30) that extends upward from the bottom wall (2) and a top part (31) that extends obliquely upward and toward the inside of the tank (1) from the top of said bottom part (30).

7. The filtration cell according to claim 6, **characterized in that** said bottom part (30) is vertical and said top part (31) is inwardly inclined relative to said bottom part by an angle comprised between 15 and 30°.

8. The filtration cell according to any one of claims 1 to 7, **characterized in that** the bottom wall (2) includes flow sections positioned so as to be inclined toward a drain channel (15) that emerges in said outlet orifice (9).

9. The filtration cell according to any one of claims 1 to 8, **characterized in that** it is supported so as to be able to pivot around a longitudinal axis (20) standing horizontally below the filtration bed of the cell, between the front and rear thereof.

10. The filtration cell according to any one of claims 7 to 9, **characterized in that** said filtration bed (7) is supported in the tank along said four side walls, the filtration bed being connected to said longitudinal wall (5) opposite that provided with a covering flap below the top of its lower part (25) that is vertical, and/or said forward wall (4) below the top of its lower part (27) that is vertical.

11. The filtration cell according to claim 10, **characterized in that** said filtration bed is connected to said longitudinal wall (3) provided with a covering flap below the top of the bottom part (30) that is vertical.

12. A filtration device comprising at least one filtration cell according to any one of claims 1 to 11.
